# EUROPÄISCHE PATENTSCHRIFT

(11) **EP 1 720 096 B1**
(45) Veröffentlichungstag und Bekanntmachung des Hinweises auf die Patenterteilung: **12.07.2017**
(21) Anmeldenummer: 05009913.4
(22) Anmeldetag: 06.05.2005
(51) Int. Cl.: G06F 9/445

(54) **Verfahren zum Hinzufügen einer Funktionalität zu einem ausführbaren ersten Modul eines Programmpakets**
Method for adding functionality to an executable module of a program package
Procédé pour l'addition de fonctionnalité à un module d'un paquetage de logiciel

(43) Veröffentlichungstag der Anmeldung: 08.11.2006
(73) Patentinhaber: SFNT Germany GmbH, 82110 Germering (DE)
(72) Erfinder: Zunke, Michael, 85609 Aschheim (DE)
(74) Vertreter: Scheer, Luc

(56) Entgegenhaltungen:
- US-A- 5 673 315
- US-A- 5 956 710
- US-A- 5 974 549
- US-A1- 2002 033 838
- US-A1- 2004 237 071
- US-B1- 6 874 149

## Beschreibung

Die Erfindung betrifft ein Verfahren zum Hinzufügen einer Funktionalität zu einem ausführbaren ersten Modul eines Programmpakets, wobei das ausführbare erste Modul bei Ausführung eine interne Funktion bereitstellt oder eine interne Funktion eines ausführbaren zweiten Moduls des Programmpakets nutzt.
Die Patentanmeldung US5959710 offenbart ein Verfahren zum Vorsehen sogenannter user exits, die dazu dienen die Programmkontrolle vom Betriebssystem zum ausführenden Programm zu übergeben. Dies wird dadurch realisiert, dass Pointer in einer Systemservicetabelle im Kerriel-Bereich umgebogen beziehungsweise gehookt werden. Um bei einem solchen ersten Modul eines Programmpakets eine zusätzliche Funktionalität einzubinden, die an der Stelle der bereitgestellten bzw. genutzten Funktion eingreift, ist es bisher notwendig, den Source Code zumindest des ersten Moduls zu besitzen, um dort die gewünschten Änderungen durchführen zu können.

Ausgehend hiervon ist es Aufgabe der Erfindung, ein Verfahren zum Hinzufügen einer Funktionalität zu einem ausführbaren ersten Modul eines Programmpakets, wobei das ausführbare erste Modul bei Ausführung eine interne Funktion bereitstellt oder eine interne Funktion eines ausführbaren zweiten Moduls des Programmpakets nutzt, bereitzustellen, mit dem die Hinzufügung der Funktionalität ohne Kenntnis des Source Codes des ersten Moduls möglich ist.

Erfindungsgemäß wird die Aufgabe gelöst durch ein Verfahren zum Hinzufügen einer Funktionalität zu einem ausführbaren ersten Modul eines Programmpakets, wobei das ausführbare erste Modul bei Ausführung eine interne Funktion bereitstellt oder eine interne Funktion eines ausführbaren zweiten Moduls des Programmpakets nutzt, wobei, wenn das Modul nicht ausgeführt wird, eine nach außen sichtbare, auf die interne Funktion hinweisende Referenz ermittelt wird, Zusatzcode zum ersten Modul so hinzugefügt und in Abhängigkeit der ermittelten Referenz eine Umleitung im ersten Modul statisch so vorgesehen wird, daß ein geändertes, ausführbares erstes Modul vorliegt, bei dem, wenn bei der Ausführung die interne Funktion aufgerufen wird, auf den Zusatzcode umgeleitet wird, der bei Ausführung das Bereitstellen der Funktionalität bewirkt.

Bei dem Verfahren wird somit ausgenutzt, daß eine nach außen sichtbare Referenz der Funktion vorliegt. Diese Referenz wird als Angriffspunkt zur Umleitung auf den hinzugefügten Zusatzcode genutzt, so daß an dieser Stelle der hinzugefügte Zusatzcode Kontrolle über die Ausführung erlangt, wodurch die gewünschte Funktionalität mittels dem Zusatzcode verwirklicht werden kann.

Als ausführbares Modul wird hier jedes Modul verstanden, das für die Laufzeitumgebung (beispielsweise Hardware plus entsprechendes Betriebssystem) in einer solchen Form vorliegt, daß es zur Ausführung nur noch in den Speicher des Computers bzw. der Laufzeitumgebung geladen, ggf. initialisiert und gestartet werden muß. Das Modul kann dabei selbständig lauffähig sein (ausführbares Modul) oder es kann für die Ausführung noch weitere ausführbare Module benötigen (abhängig ausführbares Modul). Insbesondere kann das Modul in compilierter Form vorliegen. Bei Windows Betriebssystemen kann das ausführbare Modul eine EXE- oder eine DLL-Datei sein. Bei der .net-Umgebung von Microsoft oder einer sonstigen objektorientierten Umgebung kann das Modul ein sogenanntes Assembly, eine Klassenbibliothek oder eine Klasse sein und bei Unix basierten Betriebssystemen kann das Modul z.B. eine Shared Library sein. Das erste und zweite ausführbare Modul können in derselben Datei oder auch in separaten Dateien vorliegen.

Als interne Funktion wird hier jede Funktion des ersten bzw. zweiten Moduls verstanden, die während der Ausführung des Programmpakets aufgerufen werden kann. Nicht jedoch wird darunter das Starten der Anwendung selbst bzw. beispielsweise das Initialisieren einer DLL-Datei verstanden. Das Starten der Anwendung und das Initialisieren einer DLL-Datei muß von der Laufzeitumgebung (beispielsweise dem Betriebssystem) durchgeführt werden und ist daher keine interne Funktion im hier verwendeten Sinne.

Die Umleitung wird bevorzugt so vorgesehen, daß der Zusatzcode in den Ausführungspfad der internen Funktion eingefügt wird. Insbesondere wird er am Anfang des Ausführungspfades der internen Funktion eingefügt. Es kann eine weitere Einfügung des Zusatzcodes am Endes des Ausführungspfades vorliegen. Dies kann z.B. dazu genutzt werden, daß nach Ausführung der Funktion der entsprechende Code wieder verschlüsselt wird, wenn er mittels dem Zusatzcode am Anfang der Funktion entschlüsselt wurde. Die Einfügung am Ende kann durch Verändern der Rücksprungadresse an dem Stack, die bei Aufruf hinterlegt wurde, realisiert werden.

Mit dem erfindungsgemäßen Verfahren kann man somit zum ersten Modul für jede interne Funktion des ersten oder zweiten Moduls, über die nach außen sichtbare Referenz Zusatzcode einfügen, der vor Ausführung der internen Funktion ausgeführt wird, und damit eine gewünschte Funktionalität bereitstellt. Dabei kann es sich beispielsweise um die Funktionalität des Lizenzierens dieser Funktion handeln. Es ist also möglich, Funktionen eines Programmpakets ohne Kenntnis des Source Codes bzw. der praktischen Verwirklichung der Funktion, individuell zu lizenzieren. Insbesondere kann man mit dem erfindungsgemäßen Verfahren beispielsweise auch ein abhängiges lauffähiges Modul (beispielsweise eine DLL-Datei in compilierter Form) bzw. die durch dieses Modul bereitgestellte Funktion mit z. B. der Funktionalität der Lizenzüberprüfung nachträglich versehen und das derart geänderte, lauffähige (bzw. ausführbares) Modul einem Anwender übermitteln. Damit wird ein sehr flexibles Lizenzieren von einzelnen Funktionen einer Anwendung nachträglich (also nach Fertigstellung der Anwendung) möglich. Dazu mußten bisher während der Programmierung der Anwendung entsprechende Funktionsaufrufe vorgesehen werden, was aufwendig ist und daher in der Praxis nicht häufig durchgeführt wird. Mit dem erfindungsgemäßen Verfahren ist es nun möglich, bei einem fertiggestellten Programmpaket eine individuelle Lizenzierung aufgrund der erfindungsgemäßen Möglichkeit der nachträglichen individuellen Hinzufügung einer Funktionalität zu einer Funktion aus dem Programmpaket vorzusehen.

Die nach außen sichtbare Referenz kann als Metadatum oder -daten vorliegen. Unter Metadaten werden hier Hilfsdaten verstanden, die die Laufzeitumgebung benötigt, um das Modul in den Speicher laden, initialisieren und/oder starten zu können, die aber der Code des Moduls selbst nicht benötigt. Zu den Metadaten gehören insbesondere Informationen über den Startpunkt der internen Funktion (z.B. Map-Dateien, Debug-Informationen und Profiler-Informationen).

Die Referenz kann anhand zumindest eines Metadatus, das Teil des ausführbaren Programmpakets ist, ermittelt werden. Dabei kann es sich beispielsweise um einen Eintrag in der Import- und/oder Exporttabelle handeln oder beispielsweise die Angabe eines Einsprungpunktes einer Klasse bei objektorientierter Programmierung.

Die Referenz kann anhand zumindest eines Metadatus ermittelt werden, das nicht Teil des ausführbaren Programmpakets ist und bei Herstellung des ersten und/oder zweiten Moduls erzeugt wurde. Dabei kann es sich beispielsweise um während der Herstellung des Programmpakets erzeugten Debug- und/oder Profiler-Informationen handeln. Auch können sogenannte Map-Dateien benutzt werden.

Das erste Modul kann Metadaten in einer Importtabelle aufweisen, in die als Referenz ein Verweis auf die Funktion des zweiten Moduls hinterlegt ist, wobei im Änderungsschritt in der Importtabelle die Umleitung auf den hinzugefügten Zusatzcode hinterlegt wird. Damit kann in einfacher Weise die gewünschte Umleitung dauerhaft in das erste Modul eingefügt werden.

Ferner kann das zweite Modul als Metadaten eine Exporttabelle aufweisen, in der als Referenz ein Verweis auf den Startpunkt der Funktion im zweiten Modul hinterlegt ist, wobei im Änderungsschritt in der Exporttabelle die Umleitung auf den hinzugefügten Zusatzcode hinterlegt wird. Auch in diesem Fall ist eine einfache und dauerhafte Umleitung möglich.

Es ist insbesondere mit dem Änderungsschritt möglich, eine herkömmliche Export-/Import-Schnittstelle zwischen zwei Modulen über den hinzugefügten Zusatzcode umzuleiten und damit die gewünschte zusätzliche Funktionalität bereitzustellen.

Das erste Modul kann eine Importtabelle aufweisen, in der als Referenz ein Verweis auf die Funktion des zweiten Moduls hinterlegt ist, wobei in einem Änderungsschritt die Importtabelle so geändert oder gelöscht (bzw. der Verweis auf die Funktion gelöscht) wird und im ersten Modul der Aufruf der Funktion auf den Zusatzcode umgeleitet wird. Damit ist kein Import auf die interne Funktion des zweiten Moduls im ersten Modul als von außen sichtbare Referenz mehr enthalten. Dies kann zur Erhöhung der Sicherheit dienen, wenn z.B. das erste Modul mittels dem zweiten Modul gegen unberechtigte Nutzung geschützt wird (z.B. in Form einer Lizenzüberprüfung), da der Zusatzcode dazu verwendet werden kann, zu überprüfen, ob das zweite Modul, das die Lizenzüberprüfung durchführt, nicht gegen ein anderes Modul ausgetauscht wurde.

Der hinzugefügte Zusatzcode kann beim Start des Programmpakets bzw. des ersten Moduls eine Schnittstelle zwischen beiden Modulen aufbauen. Dies kann insbesondere eine abgesicherte und von außen nicht einsehbare Schnittstelle sein.

Der Zusatzcode kann so gestaltet sein, daß die eine Schnittstelle zwischen den beiden Modulen erst bei Aufruf der Funktion aufgebaut wird. Auch hier kann die Schnittstelle so ausgebildet werden, daß sie von außen nicht einsehbar und somit eine sichere Verbindung zwischen beiden Modulen darstellt.

Insbesondere kann im Änderungsschritt Zusatzcode eingefügt werden, der bei seiner Ausführung sicherstellt, daß eine Verbindung zwischen beiden Modulen ohne eine Zwischenschaltung weiterer Module vorliegt. Dies ist insbesondere bei der Hinzufügung der Funktionalität einer Lizenzüberprüfung vorteilhaft, da somit ausgeschlossen werden kann, daß ein Angreifer ein Modul zwischenschaltet, mit dem die Lizenzüberprüfung ausgespäht und damit ausgehebelt wird.

Im Änderungsschritt kann zur Umleitung auf den hinzugefügten Zusatzcode im Bereich des zweiten Moduls, in dem Anweisungen der bereitgestellten Funktion liegen, weiterer Code vorgesehen werden, der auf den hinzugefügten Zusatzcode verweist. Der weitere Code liegt insbesondere im Anfangsbereich der Funktion (z. B. die erste, zweite, dritte, ... Anweisung) und wird bevorzugt so vorgesehen, daß er Code der Funktion überschreibt. Der Zusatzcode kann eine Rücksprunganweisung enthalten, die zu einer dem überschriebenen Code nachfolgende Anweisung der Funktion weist.

Alternativ ist es möglich, im Änderungsschritt die Umleitung sowie den die Funktion realisierenden Code in das erste Modul zu integrieren. Dabei kann es sich um den Code des zweiten Moduls oder um einen die interne Funktion realisierenden Code handeln. Damit wird vorteilhaft erreicht, daß keinerlei nach außen sichtbare Schnittstelle zwischen den beiden Modulen mehr vorliegt.

Bei der Funktionalität kann es sich insbesondere um eine Absicherung einer Schnittstelle zwischen zwei Modulen handeln. Dies wird insbesondere bei einem nachträglichem Schutz des Programms gegen unberechtigte Nutzung verwendet. Ferner kann die Funktionalität eine Lizenzüberprüfung zumindest eines der Module sein. Auch kann die Funktionalität darin bestehen, daß das erste und/oder zweite Modul zumindest teilweise verschlüsselt wird und daß mittels dem Zusatzcode eine Entschlüsselung durchgeführt wird. Die Entschlüsselung wird bevorzugt nur dann durchgeführt, wenn eine vorherige Lizenzüberprüfung das Vorliegen einer Lizenz bestätigt. Wenn keine Lizenz vorliegt, wird keine Entschlüsselung durchgeführt, so daß das Programmpaket auch nicht ausgeführt werden kann.

Das Programmpaket kann mehrere zweite Module mit mehreren unterschiedlichen Funktionen, die jeweils mit einer nach außen sichtbaren Referenz in den Ausführungspfad eingebunden sind, aufweisen, wobei jede dieser Funktionen in der beschriebenen Art im Änderungsschritt über den Zusatzcode umgeleitet werden können. Das gleiche gilt, wenn ein zweites Modul mehrere Funktionen bereitstellt, die wiederum mit einer nach außen sichtbaren Referenz in den Ausführungspfad eingebunden sind.

Das Verfahren kann ferner den Schritt der Herstellung des ausführbaren Programmpakets umfassen, wobei die Herstellung so durchgeführt wird, daß dabei die nach außen sichtbare Referenz auf die Funktion erzeugt wird. Bei der Herstellung kann es sich beispielsweise um das Compilieren des Source Codes handeln, aus dem das ausführbare erste Modul erzeugt wird. Dabei können beispielsweise während der Compilierung gewöhnlicher Weise erzeugte Metadaten (z.B. Import-/Exportinformationen) benutzt werden. Ferner ist es möglich, die Herstellung so zu beeinflussen, daß zusätzliche Metadaten erzeugt werden. So kann man in das zu compilierende Modul einen Export einfügen, so daß in dem compilierten und damit ausführbaren Modul in einer Exporttabelle ein Verweis auf den Beginn der Funktion enthalten ist. Dieser Export wird in dem Ermittlungsschritt dann als Referenz erkannt, wobei bei Änderung des ausführbaren Moduls bevorzugt der Verweis in der Exporttabelle auf die Funktion bzw. die gesamte Exporttabelle gelöscht wird. In diesem Fall enthält das derart geänderte Modul dann beispielsweise keine nach außen sichtbare Referenz auf diese Funktion mehr.

Ferner wird ein Computerprogrammprodukt bereitgestellt, das Softwarecode umfaßt, um die Schritte des erfindungsgemäßen Verfahrens bzw. seiner Weiterbildungen durchzuführen, wenn das Produkt auf einem Computer ausgeführt wird.

Die Erfindung wird nachfolgend unter Bezugnahme auf die Zeichnung beispielhalber noch näher erläutert. Es zeigen:
- Fig. 1: eine schematische Darstellung eines ausführbaren Programmpakets;
- Fig. 2: eine schematische Darstellung einer Hinzufügung einer Funktionalität zu einem Programmpaket von Fig.1 gemäß einer ersten Ausführungsform;
- Fig. 3: eine schematische Darstellung einer Hinzufügung einer Funktionalität zu einem Programmpaket von Fig. 1 gemäß einer zweiten Ausführungsform;
- Fig. 4: eine schematische Darstellung einer Hinzufügung einer Funktionalität zu einem Programmpaket von Fig. 1 gemäß einer dritten Ausführungsform;
- Fig. 5: eine schematische Darstellung einer Hinzufügung einer Funktionalität zu einem Programmpaket von Fig. 1 gemäß einer vierten Ausführungsform;
- Fig. 6: eine schematische Darstellung einer Hinzufügung einer Funktionalität zu einem Programmpaket von Fig. 1 gemäß einer fünften Ausführungsform;
- Fig. 7: eine schematische Darstellung einer Hinzufügung einer Funktionalität zu einem Programmpaket von Fig. 1 gemäß einer sechsten Ausführungsform;
- Fig. 8: eine schematische Darstellung einer Hinzufügung einer Funktionalität zu einem Programmpaket von Fig. 1 gemäß einer siebten Ausführungsform;
- Fig. 9: eine schematische Darstellung eines weiteren Programmpakets;
- Fig. 10: eine schematische Darstellung des Programmpakets von Fig. 9 mit einer hinzugefügten Funktionalität, und
- Fig. 11: eine schematische Darstellung des geänderten Programmpakets von Fig. 10 bei Ausführung.

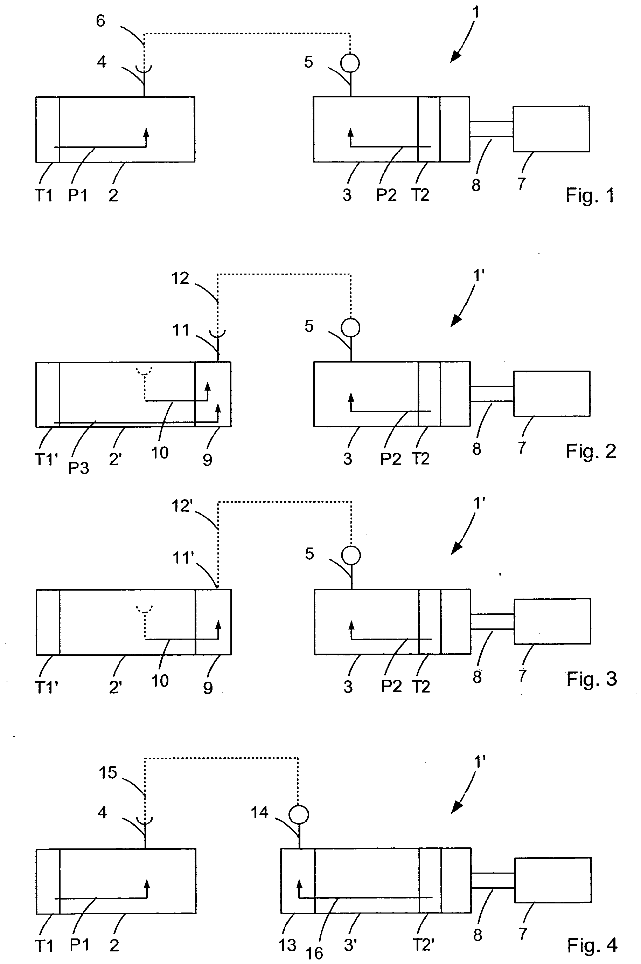

Wie in Fig. 1 schematisch dargestellt ist, umfaßt ein ausführbares Programmpaket 1 eine zu schützende ausführbare Anwendung 2 (erstes Modul, hier in Form einer EXE Datei für Windows Betriebssysteme) und ein ausführbares zweites Modul 3 (hier in Form einer DLL Datei).

Die Anwendung 2 sowie das zweite Modul 3 sind über eine Import/Export-Schnittstelle verbunden. Dies ist schematisch dadurch angedeutet, daß die Anwendung 2 einen Import 4 aufweist, der auf einen entsprechenden Export 5 des zweiten Moduls 3 verweist. Über den Import 4 und den Export 5 wird somit eine mittels dem zweiten Modul 3 bereitgestellte Funktion der Anwendung 2 zur Verfügung gestellt, wie dies durch die gestrichelte Linie 6 angedeutet wird, so daß die Funktion des zweiten Moduls 3 in den Ausführungspfad der Anwendung 2 eingebunden ist.

Die notwendigen Daten bzw. Metadaten für den Import 4 sind in einer bekannten Struktur (in einer sogenannten Importtabelle T1) in der Anwendung 2 hinterlegt (hier durch Pfeil P1 angedeutet). In gleicher Weise sind die entsprechenden Daten für den Export 5 in einer Exporttabelle in dem zweiten Modul 3 hinterlegt (hier durch Pfeil P2 angedeutet). Sowohl die Import- als auch die Exporttabelle T1, T2 sind von außen einsehbar. Das heißt, daß zwar die Anwendung 2 und das zweite Modul 3 in compilierter und somit ausführbarer Form vorliegen, jedoch die Import- und Exporttabelle T1, T2 aufgrund der bekannten Struktur von außen ohne Probleme ausgelesen werden kann.

Das zweite Modul 3 dient in dem hier beschriebenen Beispiel zur Überprüfung des Vorliegens einer Lizenz zur Ausführung der Anwendung 2. Dazu wird eine entsprechende Funktion in dem zweiten Modul 3 von der Anwendung 2 über den Import 4 und den Export 5 aufgerufen, und das zweite Modul 3 führt die entsprechende Lizenzüberprüfung z. B. mit Hilfe eines zusätzlichen Hardwareelementes 7 durch, das über eine sichere (von außen nicht einsehbare) Verbindung 8 mit dem zweiten Modul 3 kommuniziert.

Die Import/Export-Verbindung 6 ist hingegen eine nach außen offene und somit unsichere Verbindung, da die entsprechenden Metadaten für den Import 4 und den Export 5 in den Import/Exporttabellen hinterlegt sind.

Die offene und damit unsichere Verbindung über Import 4 und Export 5 wird erfindungsgemäß ausgenutzt, um die Verbindung zwischen Anwendung 2 und zweitem Modul 3 abzusichern. Dazu wird in einem Änderungsschritt zu der Anwendung 2 zusätzlicher Code 9 hinzugefügt und eine Umleitung 10 vorgesehen, die den internen Aufruf des Imports in den Zusatzcode 9 umleitet, so daß der Import 4 von außen nicht mehr sichtbar ist. Dies ist dadurch gedeutet, daß der Import 4 gestrichelt innerhalb der Anwendung 2 eingezeichnet ist. Die Importtabelle T1 wird so geändert, daß sie in den Zusatzcode 9 verweist (Pfeil P3), so daß an der entsprechenden Stelle im Zusatzcode 9 beim Laden der Anwendung die entsprechende Adresse der Funktion des zweiten Moduls 3 eingetragen wird. Es liegt damit ein Import 11 im Bereich des Zusatzcodes 9 und eine geänderte Importtabelle T1' vor. Diese Änderung wird vor Ausführung der Anwendung 2 so durchgeführt (also z. B. an der auf einem Datenträger gespeicherten Anwendung), daß danach eine geänderte Anwendung 2' (z. B. auf einem Datenträger) vorliegt.

Der Zusatzcode 9 dient hier dazu sicherzustellen, daß das zweite Modul 3 nicht unbemerkt durch ein anderes Modul ersetzt wird. Dies kann beispielsweise durch die Überprüfung eines Zertifikats erfolgen. Der Import 11 des Zusatzcodes 9 kann über eine Verbindung 12 mit dem Export 5 des zweiten Moduls 3 verbunden werden, wenn das geänderte Programmpaket 1' in den Arbeitsspeicher eines Computers geladen und ausgeführt wird.

Bei diesem beschriebenen Vorgehen zur Änderung des Programmpakets 1 in das Programmpaket 1' wird somit eine nach außen sichtbare Referenz (Import 4) der in dem Ausführungspfad der Anwendung 2 eingebundenen Funktion des zweiten Moduls 3 dazu benutzt, den Ausführungspfad über den hinzugefügten Code 9 umzuleiten. Sowohl die Umleitung 10 wie auch der hinzugefügte Code 9 werden vor Ausführung der Anwendung 2 statisch zu dieser hinzugefügt, so daß eine geänderte Anwendung 2' und damit ein geändertes Programmpaket 1' vorliegt, das ausführbar ist. Vorteilhaft bei diesem Vorgehen ist, daß keinerlei Wissen über den internen Ablauf in der Anwendung 2 oder in dem zweiten Modul 3 vorliegen muß, da zur Umleitung des Ausführungspfades für den Zusatzcode eine nach außen sichtbare Referenz (hier der Import 4) verwendet wird.

In Fig. 3 ist der Fall gezeigt, bei der die Änderung so durchgeführt wurde, daß der Verweis (Pfeil P1) in der Importtabelle T1 gelöscht wurde. Somit liegt wiederum eine geänderte Importtabelle T1' vor. Gleiche Elemente in Fig. 3 bzw. durch gleiche Schritte (wie bereits beschrieben) erzeugte gleich Elemente in Fig. 3 weisen die gleichen Bezugszeichen wie in Fig. 2 auf und werden gegebenenfalls nicht noch einmal beschrieben. Dies gilt auch entsprechend für die nachfolgenden Ausführungsformen. Der Zusatzcode 9 enthält die notwendigen Anweisungen, um die Verbindung 12' über den Punkt 11' im Ausführungspfad im Zusatzcode 9 zum Export 5 erzeugen zu können.

Die Importtabelle T1 kann auch vollständig gelöscht werden (nicht gezeigt), wobei es jedoch vorteilhaft sein kann sie nicht vollständig zu löschen und zumindest einen Verweis auf das zweite Modul in der Importtabelle T1 zu belassen, da dann das Betriebssystem bzw. die Laufzeitumgebung beim Laden des geänderten Programmpakets 1' die notwendige Initialisierung durchführt.

In Fig. 4 ist ein geändertes Programmpaket 1' gezeigt, bei der nicht der Import 4, sondern der Export 5 des zweiten Moduls 3 über ausführbaren Zusatzcode 13 umgeleitet wird, der im Änderungsschritt zum zweiten Modul 3 hinzugefügt wird, so daß ein geändertes zweites Modul 3' vorliegt. Die Umleitung 16 kann hier in entsprechender Weise wie bei dem Beispiel von Fig. 2 durch eine entsprechende Änderung der Exporttabelle T2 des zweiten Moduls 3 im Änderungsschritt realisiert werden, so daß eine geänderte Exporttabelle T2' vorliegt. Der Zusatzcode 13 enthält einen eigenen Export 14, der den bisherigen Import 5 ersetzt, so daß beim Aufruf der Funktion des zweiten Moduls 3' zuerst der Zusatzcode 13 ausgeführt wird, wenn das geänderte Programmpaket 1 in den Speicher eines Computers geladen und ausgeführt wird. Der Zusatzcode 13 kann z.B. überprüfen, von wem der Aufruf erfolgt (z.B. mittels einer Signatur) und somit ausschließen, daß der Aufruf von einer anderen Anwendung als der Anwendung 2 erfolgt. Damit kann ein Ausforschen des zweiten Moduls 3' verhindert werden. Auch kann ausgeschlossen werden, daß die zu schützende Anwendung 2 gegen eine andere Anwendung ausgetauscht wurde.

Durch die Umleitung 16 des Ausführungspfades über den zusätzlichen Export 14 des zweiten Moduls 3' und die Verbindung 15 wird dem Programmpaket eine Funktionalität (hier die Überprüfung, von wem der Aufruf des zweiten Moduls 3 erfolgt) hinzugefügt, ohne daß die interne Struktur des zweiten Moduls 3 oder der Anwendung 2 bekannt sein muß.

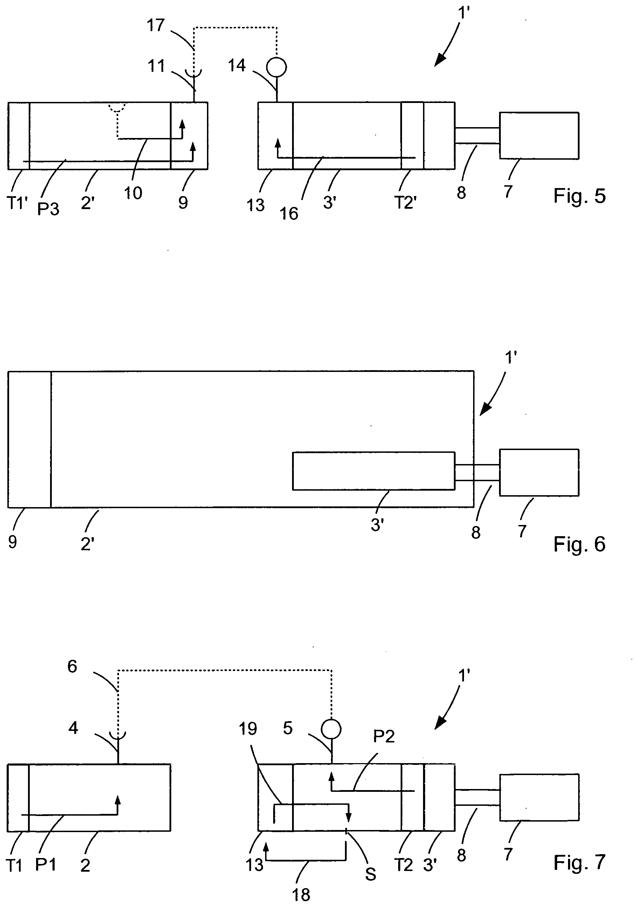

In Fig. 5 ist ein geändertes Programmpaket 1' gezeigt, bei dem sowohl der Import 4 der Anwendung 2 als auch der Export 5 des zweiten Moduls 3 jeweils über Zusatzcode 9, 13 umgeleitet sind. Die Ausführungsform von Fig. 5 ist somit eine Kombination der Ausführungsformen der Fig. 2 und 4, so daß die Änderungsschritte von Fig. 2 und 4 kombiniert werden, um von dem Programmpaket von Fig. 1 zum geänderten Programmpaket 1' von Fig. 2 zu gelangen. Mit dem geänderten Programmpaket 1' von Fig. 5 kann beispielsweise eine sichere Verbindung 17 realisiert werden, da mittels dem Zusatzcode 9 und 13 eine entsprechende Ver- und Entschlüsselung der über die Verbindung 17 übertragenen Daten erfolgen kann.

In Fig. 6 ist ein weiteres geändertes Programmpaket 1' gezeigt, bei dem das zweite Modul 3 vollständig in die Anwendung 2 integriert wird und die unsichere Verbindung 12 auch in die Anwendung 2 mit aufgenommen wird. Damit liegt nur noch eine geänderte Anwendung 2' vor, die keinerlei nach außen sichtbare und damit unsichere Verbindung zum zweiten Modul 3, das nun vollständig in der Anwendung 2 integriert ist, aufweist. Das zweite Modul 3 kann, so wie es ist, in die Anwendung 2 aufgenommen werden oder das zweite Modul 3 wird durch geänderten Code ersetzt, der die gleiche Funktion wie das zweite Modul 3 zur Verfügung stellt.

Bei den in Fig. 2 bis 5 beschriebenen Ausführungsbeispielen wurde die Umleitung jeweils durch eine Änderung in der Export- oder Importtabelle realisiert. Eine Umleitung des Ausführungspfades bei dem Export 5 kann jedoch auch dadurch realisiert werden, daß die Exporttabelle nicht verändert wird. Statt dessen wird die Information in der Exporttabelle dahingehend ausgewertet, daß man den Startpunkt S im zweiten Modul 3 ermittelt und am Startpunkt oder dahinter zumindest eine Anweisung teilweise mit einem oder mehreren Zusatzcode-Anweisungen überschreibt, die auf den zum zweiten Modul 3 hinzugefügten Code 13 verweist, wie es schematisch durch den Pfeil 18 in Fig. 7 angedeutet ist. Mit Hilfe des zusätzlichen Codes 13 wird die gewünschte Funktionalität realisiert und danach in die ursprüngliche Funktion zurückverzweigt, wie durch den Pfeil 19 angedeutet ist. Es liegt also auch in diesem Fall ein geändertes zweites Modul 3' vor, so daß nach Durchführung der beschriebenen Änderungen ein geändertes Programmpaket 1' gegeben ist, das im Vergleich zu dem ursprünglichen Paket 1 die mittels dem Zusatzcode 13 bewirkte zusätzliche Funktionalität aufweist.

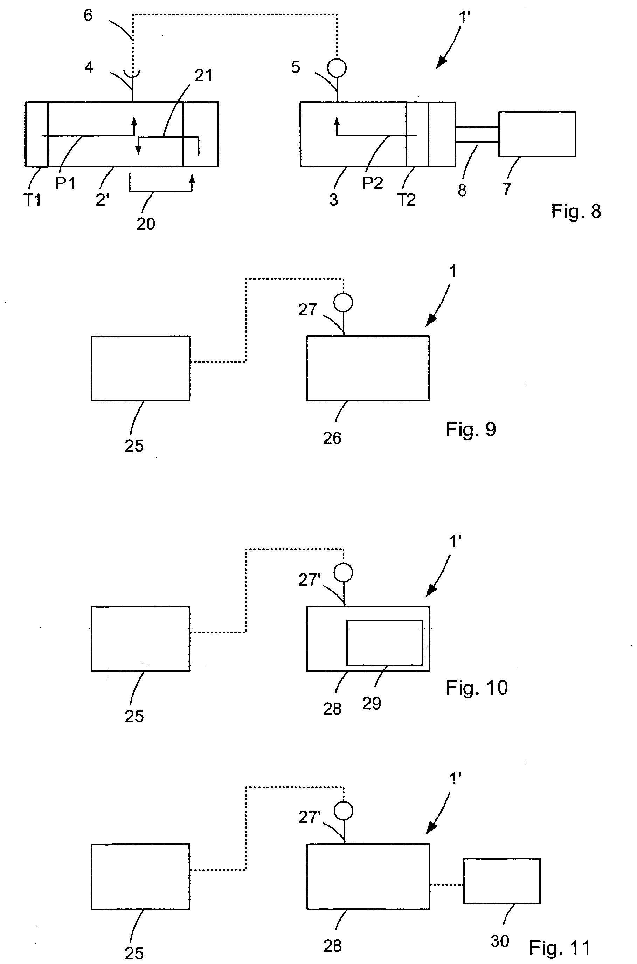

In gleicher Weise kann der Import 4 der Anwendung 2 umgeleitet werden, wie in Fig. 8 angedeutet ist. Auch hier wird nicht die Importtabelle geändert, sondern eine für den Import benötigte Anweisung wird zumindest teilweise durch eine auf den zur Anwendung 2 hinzugefügten Zusatzcode 9 verweisende Anweisung ersetzt bzw. es wird an dieser Stelle eine verzweigende Anweisung eingefügt, wie durch den Pfeil 20 angedeutet ist. Auch hier wird bevorzugt eine Rücksprunganweisung im Zusatzcode 9 vorgesehen (Pfeil 21). Somit liegt eine geänderte Anwendung 2' vor, in der die Umleitung 20, 21 statisch und damit dauerhaft eingebracht ist.

Der Änderungsschritt kann auch so ausgeführt werden, daß die in Verbindung mit Fig. 7 und 8 beschriebenen Änderungen zusammen durchgeführt werden.

Natürlich können die Ausführungsformen von Fig. 2 bis 8, soweit sinnvoll, miteinander kombiniert werden (so z.B. Fig. 2 und 7 sowie Fig. 4 und 8).

Bei den bisher beschriebenen Ausführungsformen wird mittels des Zusatzcodes 9, 13 die an sich unsichere Verbindung zwischen Anwendung 2 und zweitem Modul 3 abgesichert. Es wird also die Funktionalität der Absicherung der Verbindung zwischen Anwendung 2 und zweitem Modul 3 mittels dem beschriebenen Änderungsschritt zum Programmpaket 1 hinzugefügt.

Natürlich kann mittels dem hinzugefügten ausführbaren Code 9, 13 auch eine andere Funktionalität zum Programmpaket 1 hinzugefügt werden. So kann beispielsweise der Code 9 und/oder 13 dazu benutzt werden, die durch das zweite Modul 3 zur Verfügung gestellte Funktion individuell zu lizenzieren. Bei der durch das zweite Modul 3 zur Verfügung gestellten Funktion kann es sich um eine beliebige Funktion handeln, die in der Anwendung benutzt wird.

Häufig wird eine Vielzahl von unterschiedlichen zweiten Modulen 3 (nicht eingezeichnet) vorgesehen, die alle über entsprechende Import/Export-Schnittstellen mit der Anwendung 2 verbunden sind. Jede dieser Schnittstellen kann in der beschriebenen Weise über Zusatzcodes umgeleitet werden und somit kann auch jedes zweite Modul (bzw. jede einzelne über einen Export bereitgestellte Funktion der zweiten Module 3) unterschiedlich und individuell lizenziert werden. Damit ist eine außerordentlich hohe Flexibilität bei der Lizenzierung gegeben.

In Fig. 9 ist schematisch ein Programmpaket 1 gezeigt, das ein erstes Objekt 25 bzw. eine erste Klasse 25 oder ein zweites Objekt bzw. eine zweite Klasse 26 umfaßt. Es kann sich dabei z.B. um ein Programmpaket für die .net-Umgebung handeln. Die zweite Klasse 26 weist einen in den Metadaten angegebenen Einsprungpunkt 27 der mittels der zweiten Klasse 26 zur Verfügung gestellten Funktion auf. Um die zweite Klasse 26 zu schützen, wird wie folgt vorgegangen. Die zweite Klasse 26 wird im Änderungsschritt verschlüsselt (als verschlüsselte Einheit 29) in einer weiteren Klasse 28 hinterlegt, die den gleichen Namen wie die zweite Klasse 26 trägt und das gleiche Interface (gleiche Signatur) wie Klasse 26 aufweist, so daß ein geändertes Programmpaket 1' mit den Klassen 25 und 28 vorliegt (Fig. 10), wobei die Metadaten (z.B. Einsprungpunkt 27') der Klasse 28 die Metadaten (z. B. Einsprungpunkt 27) der Klasse 26 ersetzen. Die weitere Klasse 28 enthält den Zusatzcode, der die gewünschte Funktionalität bei Ausführung bewirkt.

Wenn nun während der Programmausführung über die erste Klasse 25 die die zweite Klasse und damit die weitere Klasse 28 aufgerufen wird, wird diese geladen und ausgeführt. Bei der Ausführung werden durch den Zusatzcode die verschlüsselte Einheit 29 entschlüsselt und als weiteres Objekt 30 vorgesehen. Die Klasse 28 dient somit als Proxy für die entschlüsselte Klasse 30 (Fig. 11), da der Ausführungspfad über die Klasse 28 läuft. Vor der Entschlüsselung kann z.B. eine Lizenzüberprüfung durchgeführt werden. Auch hier wird im Änderungsschritt (von Fig. 9 nach Fig. 10) die nach außen sichtbare Referenz (Metadaten bezüglich des Einsprungpunktes 27) genutzt, um die Umleitung auf den Zusatzcode (Klasse 28) statisch sowie den Zusatz selbst statisch in das Programmpaket einzubinden, so daß ein geändertes Programmpaket 1' vorliegt (Fig. 10).

Die oben beschriebenen Vorgehensweisen können auch innerhalb eines einzelnen Moduls eines Programmpakets angewendet werden.

Ferner kann vor dem beschriebenen Ermittlungsschritt, in dem die nach außen sichtbare Referenz (z. B. Import oder Export) ermittelt wird, und dem Änderungsschritt, in dem z. B. die Import- und/oder Exporttabelle geändert wird, noch ein Schritt des Erzeugens des ausführbaren Programmpakets (bzw. eines ausführbaren Moduls) vorgesehen werden, der so ausgelegt ist, daß bei der Erzeugung (beispielsweise der Compilierung von Zusatzcode in Maschinencode) eine nach außen sichtbare Referenz, die auf die Funktion des Moduls bzw. des Programmpakets verweist, erzeugt wird. Dabei kann es sich um herkömmlicherweise bereits erzeugte Referenzen handeln, wie z. B. eine Import- oder Exporttabelle. Es ist jedoch auch möglich, den Herstellungsvorgang bzw. den Compiliervorgang so zu gestalten, daß zusätzliche Informationen (Metadaten) erzeugt werden, die als Referenz auf die Funktion genutzt werden können. Diese Metadaten können dauerhaft im ausführbaren Programmpaket bzw. ausführbaren Modul enthalten sein oder kein dauerhafter Bestandteil davon sein.

## Patentansprüche

1. Verfahren zum Hinzufügen einer Funktionalität zu einem ausführbaren ersten Modul (2) eines Programmpakets, (1) wobei das ausführbare erste Modul (2) bei Ausführung einer zugehörigen Anwendung eine interne Funktion bereitstellt oder eine interne Funktion eines ausführbaren zweiten Moduls des Programmpakets nutzt;
wobei, wenn das erste Modul nicht ausgeführt wird, eine nach außen sichtbare, auf die interne Funktion des ausführbaren zweiten Moduls hinweisende Referenz (5, 14) ermittelt wird, Zusatzcode (9) zum ersten Modul (2') so hinzugefügt und in Abhängigkeit der ermittelten Referenz eine Umleitung (10) im ersten Modul (2') statisch so vorgesehen wird, daß ein geändertes, ausführbares erstes Modul (2') vorliegt, bei dem, wenn bei der Ausführung die interne Funktion aufgerufen wird, auf den Zusatzcode (9) umgeleitet wird, der bei Ausführung das Bereitstellen der Funktionalität bewirkt.

2. Verfahren nach Anspruch 1, bei dem die Referenz anhand zumindest einem Metadatum, das Teil des ausführbaren Programmpakets ist, ermittelt wird.

3. Verfahren nach Anspruch 1 oder 2, bei dem die Referenz anhand zumindest einem Metadatum, das nicht Teil des ausführbaren Programmpakets ist und bei Herstellung des ersten und/oder zweiten Moduls erzeugt wurde, ermittelt wird.

4. Verfahren nach einem der obigen Ansprüche, bei dem das erste Modul eine Exporttabelle aufweist, in der als Referenz ein Verweis auf den Startpunkt der Funktion im ersten Modul hinterlegt ist, wobei im Änderungsschritt in der Exporttabelle die Umleitung auf den hinzugefügten Zusatzcode hinterlegt wird.

5. Verfahren nach einem der obigen Ansprüche, bei dem im Änderungsschritt zur Umleitung auf den Zusatzcode im Bereich des Moduls, in dem Anweisungen der bereitgestellten Funktion liegen, weiterer Code vorgesehen wird, der auf den hinzugefügten Zusatzcode verweist.

6. Verfahren nach einem der obigen Ansprüche, bei dem das erste Modul eine Importtabelle aufweist, in der als Referenz ein Verweis auf die Funktion des zweiten Moduls hinterlegt ist, wobei im Änderungsschritt in der Importtabelle die Umleitung auf den hinzugefügten Zusatzcode hinterlegt wird.

7. Verfahren nach einem der Ansprüche 1 bis 5, bei dem das erste Modul eine Importtabelle aufweist, in der als Referenz ein Verweis auf die Funktion des zweiten Moduls hinterlegt ist, wobei im Änderungsschritt der Verweis der Importtabelle gelöscht und als Umleitung im ersten Modul ein Aufruf der Funktion auf den Zusatzcode umgeleitet wird.

8. Verfahren nach einem der obigen Ansprüche, bei dem der hinzugefügte Zusatzcode beim Starten des ersten Moduls oder bei Aufruf der Funktion eine Schnittstelle zwischen beiden Modulen aufbaut.

9. Verfahren nach einem der obigen Ansprüche, bei dem im Änderungsschritt Zusatzcode eingefügt wird, der bei seiner Ausführung sicherstellt, daß eine Verbindung zwischen beiden Modulen ohne Zwischenschaltung eines weiteren Moduls vorliegt.

10. Verfahren nach einem der obigen Ansprüche, bei dem im Änderungsschritt die Umleitung sowie die Funktion realisierender Code in das erste Modul selbst integriert werden.

11. Verfahren nach einem der obigen Ansprüche, bei dem die Funktionalität ein Absichern einer Schnittstelle zwischen den beiden Modulen bewirkt, wobei insbesondere auch im zweiten Modul entsprechender Zusatzcode eingefügt wird.

12. Verfahren nach einem der obigen Ansprüche, bei dem die Funktionalität eine Lizenzüberprüfung zumindest eines der Module und/oder der internen Funktion bewirkt.

13. Verfahren nach einem der obigen Ansprüche, bei dem das ausführbare Programmpaket so hergestellt wird, daß nach seiner Herstellung die nach außen sichtbare, auf die Funktion weisende Referenz vorliegt.

14. Computerprogrammprodukt, das Softwarecode umfaßt, um die Schritte eines der obigen Verfahrensansprüche durchzuführen, wenn das Produkt auf einem Computer ausgeführt wird.

## Claims

1. A method of adding a functionality to an executable first module of a program package, the executable first module, during execution, providing an internal function or utilizing an internal function of an executable second module of the program package;
wherein, if the first module is not executed, an externally visible reference is determined, the reference referring to the internal function, additional code is added to the first module and, depending on the determined reference, a rerouting is statically provided in the first module such that a step of modification of the executable first module is carried out, by which, when the internal function is called during execution, a rerouting to the additional code is carried out which, during execution, causes the provision of the functionality.

2. The method according to claim 1, wherein the reference is determined on the basis of at least one piece of metadata that is part of the executable program package.

3. The method according to claim 1 or 2, wherein the reference is determined on the basis of at least one piece of metadata that is not part of the executable program package and that was generated when designing the first and/or the second module.

4. The method according to any of the above claims, wherein the first module includes an export table in which an indication of the starting point of the function in the first module is stored as the reference, the rerouting to the added additional code being stored in the export table during the modification step.

5. The method according to any of the above claims, wherein, during the modification step, to reroute to the additional code, further code referring to the added additional code is provided in the area of the module in which instructions of the provided function are present.

6. The method according to any of the above claims, wherein the first module includes an import table in which a referring to the function of the second module is stored as the reference, the rerouting to the added additional code being stored in the import table during the modification step.

7. The method according to any of claims 1 to 5, wherein the first module includes an import table in which a referring to the function of the second module is stored as the reference, the referring to the import table being deleted and a call of the function being rerouted to the additional code as the rerouting in the first module during the modification step.

8. The method according to any of the above claims, wherein the added additional code constitutes an interface between the two modules when the first module is started or when the function is called.

9. The method according to any of the above claims, wherein, during the modification step, additional code is inserted which, during its execution, ensures that there is a link between the two modules without inserting any further module.

10. The method according to any of the above claims, wherein, during the modification step, the rerouting as well as code implementing the function are integrated within the first module itself.

11. The method according to any of the above claims, wherein the functionality causes a protection of an interface between the two modules, corresponding additional code being more particularly also inserted in the second module.

12. The method according to any of the above claims, wherein the functionality causes a license verification of at least one of the modules and/or of the internal function.

13. The method according to any of the above claims, wherein the executable program package is designed such that, after its design, the externally visible reference that points to the function is present.

14. A computer program product comprising software code, in order to carry out the steps of any of the above method claims, when the product is executed on a computer.

## Revendications

1. Procédé d'ajout d'une fonctionnalité à un premier module exécutable d'un ensemble de programmes, le premier module exécutable, lors de son exécution, fournissant une fonction interne ou utilisant une fonction interne d'un deuxième module exécutable de l'ensemble de programmes,
dans lequel, lorsque le premier module n'est pas exécuté, on détermine une référence visible de l'extérieur et renvoyant vers la fonction interne du deuxième module exécutable, on ajoute un code additionnel au premier module, et on prévoit, en fonction de la référence déterminée, un reroutage statique dans le premier module, de sorte qu'une étape de modification du premier module exécutable se produit, par laquelle, lorsque la fonction interne est appelée, lors de son exécution, on réalise un reroutage vers le code additionnel, lequel provoque, lors de son exécution, la mise à disposition de la fonctionnalité.

2. Procédé selon la revendication 1, dans lequel la référence est déterminée sur la base d'au moins une métadonnée qui fait partie de l'ensemble de programmes exécutables.

3. Procédé selon la revendication 1 ou 2, dans lequel la référence est déterminée sur la base d'au moins une métadonnée qui ne fait pas partie de l'ensemble de programmes exécutables et qui a été générée lors de la conception du premier et/ou du deuxième module.

4. Procédé selon l'une des revendications précédentes, dans lequel le premier module présente un tableau d'export dans lequel un renvoi vers un point de départ de la fonction dans le premier module est mémorisé en tant que référence, le reroutage vers le code additionnel ajouté étant mémorisé dans le tableau d'export lors de l'étape de modification.

5. Procédé selon l'une des revendications précédentes, dans lequel, lors de l'étape de modification, pour rerouter vers le code additionnel, on prévoit un autre code renvoyant au code additionnel ajouté dans la zone du module dans laquelle des instructions de la fonction fournie sont présentes.

6. Procédé selon l'une des revendications précédentes, dans lequel le premier module présente un tableau d'import dans lequel un renvoi vers la fonction du deuxième module est mémorisé en tant que référence, le reroutage vers le code additionnel ajouté étant mémorisé dans le tableau d'import lors de l'étape de modification.

7. Procédé selon l'une des revendications 1 à 5, dans lequel le premier module présente un tableau d'import dans lequel un renvoi vers la fonction du deuxième module est mémorisé en tant que référence, lors de l'étape de modification, le renvoi vers le tableau d'import étant effacé et un appel de la fonction étant rerouté vers le code additionnel en tant que reroutage dans le premier module.

8. Procédé selon l'une des revendications précédentes, dans lequel le code additionnel ajouté constitue une interface entre les deux modules lors du lancement du premier module ou de l'appel de la fonction.

9. Procédé selon l'une des revendications précédentes, dans lequel on insère un code additionnel lors de l'étape de modification, lequel assure, lors de son exécution, la liaison entre les deux modules sans insertion d'un autre module.

10. Procédé selon l'une des revendications précédentes, dans lequel, lors de l'étape de modification, le reroutage et un code réalisant la fonction sont intégrés dans le premier module même.

11. Procédé selon l'une des revendications précédentes, dans lequel la fonctionnalité provoque une protection d'une interface entre les deux modules, un code additionnel correspondant étant en particulier également inséré dans le deuxième module.

12. Procédé selon l'une des revendications précédentes, dans lequel la fonctionnalité provoque une vérification de licence d'au moins l'un des modules et/ou de la fonction interne.

13. Procédé selon l'une des revendications précédentes, dans lequel on conçoit l'ensemble de programmes exécutables, de sorte que, après sa conception, la référence visible de l'extérieur et renvoyant vers la fonction est présente.

14. Produit de programme d'ordinateur comportant un code de programme pour réaliser les étapes de l'une des revendications de procédé précédentes lorsque le produit est exécuté sur un ordinateur.
